# EUROPEAN PATENT APPLICATION

(11) **EP 4 718 562 A1**
(43) Date of publication of application: **01.04.2026**
(21) Application number: 23940040.1
(22) Date of filing: 05.06.2023
(51) Int. Cl.: H01M 10/0567, H01M 10/0525

(54) **SECONDARY BATTERY AND ELECTRIC DEVICE**

(71) Applicant: Contemporary Amperex Technology Co., Limited, Ningde, Fujian 352100 (CN)
(72) Inventor: REN, Jiamo, Ningde, Fujian 352100 (CN); PENG, Chang, Ningde, Fujian 352100 (CN); CHEN, Peipei, Ningde, Fujian 352100 (CN); ZHANG, Limei, Ningde, Fujian 352100 (CN); LIU, Jiao, Ningde, Fujian 352100 (CN)
(74) Representative: Ziebig Hengelhaupt Intellectual Property Attorneys Patentanwaltskanzlei PartGmbB
(86) International application number: PCT/CN2023/098333
(87) International publication number: WO 2024/250149

(57) **Abstract**

The present application relates to the technical field of batteries, and relates to a secondary battery and an electrical apparatus. The secondary battery includes a non-aqueous electrolyte solution containing a cyclic sulfate compound. The present application further relates to an electrical apparatus including the secondary battery.

## Description

### TECHNICAL FIELD

The present application relates to the technical field of batteries, and particularly relates to a secondary battery and an electrical apparatus.

### BACKGROUND

Lithium-ion secondary batteries have become the most popular energy storage system due to their high working potential, long life, and environmental friendliness, and have been widely used in the pure electric vehicles, hybrid electric vehicles, smart grids and other fields. However, current lithium-ion batteries are difficult to meet higher demand of people for range; and in order to solve the problem of "worry about range" of people to electric vehicles, it is urgent to develop lithium-ion batteries with higher energy density.

During the first charge of a battery, a solid electrolyte film layer (SEI) forms on the surface of a negative electrode. The SEI is a good conductor of lithium ions and a poor conductor of electrons, which inhibits the continuation of lithium consumption reaction and plays a protective role in the electrode. However, the formation of the SEI consumes a large amount of lithium sources, converting lithium into inactive lithium-containing compounds such as lithium carbonate, lithium fluoride and lithium alkyl, resulting in the loss of recyclable lithium and reducing the coulombic efficiency of the battery in the first cycle and capacity of the battery. In a battery system using a graphite negative electrode, about 10% of the lithium source is consumed on the first charge, and the first coulombic efficiency is about 90%. The consumption of the lithium source is further increased when negative electrode materials with high specific volume such as alloys (silicon, tin, aluminum), oxides (silicon oxide, tin oxide, titanium oxide) and amorphous carbon anodes are used.

### SUMMARY OF THE INVENTION

In order to increase the energy density of a lithium-ion battery, one solution is to pre-supplement lithium for a positive electrode. Lithium-rich metal oxides can be added to a positive electrode plate as a lithium supplement. Therefore, an excess lithium source can be supplied in the first charge process to compensate for the lithium consumption caused by the formation of an SEI film, improve the energy density of the lithium-ion battery, and improve the coulombic efficiency of the first cycle and the cycling performance of the battery.

In the first circle of charging of a secondary battery added with the lithium supplement at the positive electrode, as the lithium-rich oxides in the lithium supplement are activated, oxygen anions are activated and participate in reaction (O²⁻/O⁻) in the delithiation process. Oxygen on the surface of the lithium supplement at the positive electrode or the lithium-rich positive electrode is released from a lattice position, and some of it will be oxidized into O² and O²⁻, and O² and O²⁻will accelerate oxidative decomposition of an electrolyte solution to generate an electrolyte solution byproduct RH⁺, and the RH⁺ will further reduce and consume lithium in a negative electrode and damage an SEI film of the negative electrode, thus making the electrolyte solution react violently with the negative electrode, and then deteriorating the first effect and the cycling performance of a battery cell.

The present application provides a secondary battery and an electrical apparatus, aiming to solve the problem that oxygen is released in the delithiation process of the lithium supplement at the positive electrode and oxidizes the electrolyte solution to generate RH⁺ to cause negative electrode damage and poor battery cell cycling performance.

In a first aspect, the present application provides a secondary battery which includes a positive electrode plate and a non-aqueous electrolyte solution, in which, the non-aqueous electrolyte solution includes an additive which includes a cyclic sulfate compound having a structure shown in a general formula (I), 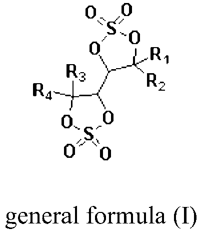 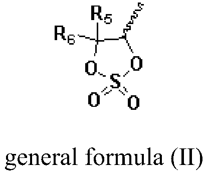
in which, R¹, R², R³ and R⁴ are independently selected from any one of groups having the structure shown in a general formula (II), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups;
R⁵ and R⁶ are independently selected from any one of groups having the structure shown in the general formula (II), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups;
the positive electrode plate includes a positive electrode material layer which includes the lithium supplement, and the lithium supplement includes but not is limited to one or more of Li₂M¹O₂, Li₂M²O₃, Li₃M³O₄, Li₅M⁴O₄ and Li₆M⁵O₄, in which, M¹ includes one or more of Ni, Co, Fe, Mn, Zn, Mg, Ca, and Cu; M² includes one or more of Mn, Sn, Mo, Ru, and Ir; M³ includes one or more of V, Nb, Cr, and Mo; M⁴ includes one or more of Fe, Cr, V, and Mo; M⁵ includes one or more of Co, V, Cr, and Mo; and in the Li₂M¹O₂, Li₂M²O₃, Li₃M³O₄, Li₅M⁴O₄, and Li₆M⁵O₄, the valence state of each metal element except Li is lower than the highest oxidation valence state of the metal element.

In some embodiments, in the additive, R¹, R², R³ and R⁴ are independently selected from any one of groups having the structure shown in the general formula (II), hydrogen atoms, halogen atoms, C1-C3 alkyl groups, C1-C3 haloalkyl groups, C1-C3 alkoxy groups, C1-C3 haloalkoxy groups, C2-C3 alkene groups, C2-C3 ester groups, cyano groups, and sulfonic acid groups; and
R⁵ and R⁶ are independently selected from any one of hydrogen atoms, halogen atoms, C1-C3 alkyl groups, C1-C3 haloalkyl groups, C1-C3 alkoxy groups, C1-C3 haloalkoxy groups, C2-C3 alkene groups, C2-C3 ester groups, cyano groups, and sulfonic acid groups.

In some embodiments, R¹, R², R³ and R⁴ are independently selected from any one of groups having the structure shown in the general formula (II), hydrogen atoms, halogen atoms, C1-C3 alkyl groups and cyano groups.

In some embodiments, R⁵ and R⁶ are independently selected from any one of hydrogen atoms and C1-C3 alkyl groups.

In some embodiments, R¹, R², R³ and R⁴ are independently selected from any one of groups having the structure shown in the general formula (II), hydrogen atoms, F atoms, Cl atoms, Br atoms, methyl groups, ethyl groups, propyl groups, isopropyl groups and cyano groups.

In some embodiments, R⁵ and R⁶ are independently selected from any one of hydrogen atoms, methyl groups, ethyl groups, propyl groups and isopropyl groups.

In some embodiments, the groups having the structure shown in the general formula (II) are selected from any one of the following groups: 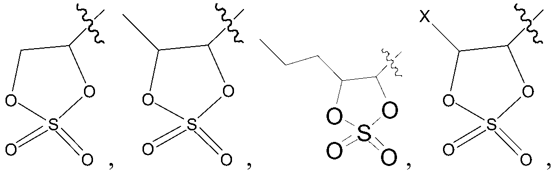 in which, X refers to F atoms, Cl atoms or Br atoms.

In some embodiments, the groups having the structure shown in the general formula (II) are selected from any one of the following groups:

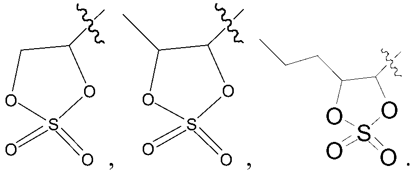

In some embodiments, the cyclic sulfate compound is selected from any one or more of the following compounds:

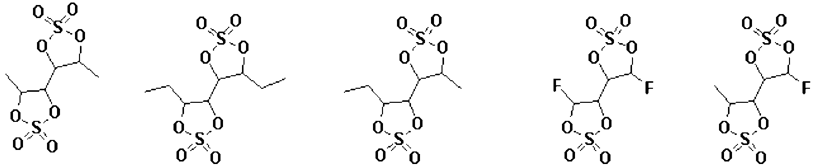

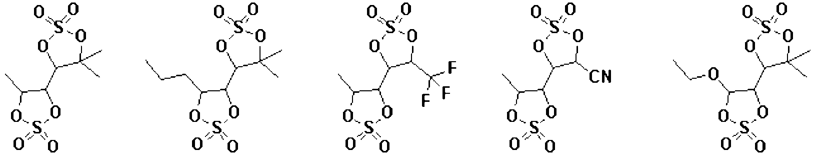

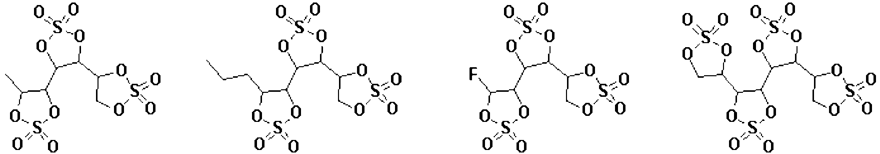

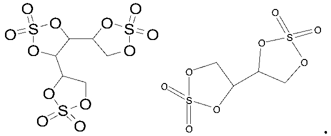

In some embodiments, the mass content of the cyclic sulfate compound in the non-aqueous electrolyte solution is W1, in which, 0.005%≤W1≤10%, optionally, 0.05%≤W1≤5%.

In some embodiments, the lithium supplement includes but is not limited to one or more of Li₂M¹O₂, Li₅M⁴O₄ and Li₆M⁵O₄, in which, M¹ includes one or more of Ni, and Cu; M⁴ includes one or more of Fe, Cr, V, and Mo; and M⁵ includes one or more of Co, V, Cr, and Mo.

In some embodiments, Li₂M¹O₂ is Li₂CuₓNi_{y}O₂, in which, x+y=1.

In some embodiments, the lithium supplement includes but is not limited to one or more of Li₂Cu_{0.6}Ni_{0.4}O₂, Li₂NiO₂, Li₅FeO₄, and Li₆CoO₄.

In some embodiments, the mass ratio of the lithium supplement in the positive electrode material layer is W₂, in which, 0.1%≤W₂≤10%; optionally, 1%≤W₂≤8%, and optionally, 1%≤W₂≤5%.

In some embodiments, the secondary battery also includes a negative electrode plate which includes a negative electrode material layer; the negative electrode material layer includes a negative electrode active material; the average particle size Dv50 of the negative electrode active material is 3-25 µm; optionally, 5µm≤Dv50≤20µm, and optionally, 7µm≤Dv50≤15µm.

In some embodiments, the active specific surface area of the positive electrode plate is B, in which, 0<B≤20 m²·g⁻¹, and optionally, 2 m²/g ≤B ≤10 m²/g.

In a second aspect, the present application provides an electrical apparatus which includes a secondary battery, in which, the secondary battery includes any secondary battery in the first aspect.

According to the secondary battery provided by the present application, the cyclic sulfate compound is added to the electrolyte solution, so that the problem that oxygen is released in the delithiation process of the lithium supplement at the positive electrode and oxidizes the electrolyte solution to generate RH⁺ to cause negative electrode damage and poor battery cell cycling performance can be solved.

### BRIEF DESCRIPTION OF THE DRAWINGS

In order to more clearly illustrate the technical solution of the embodiments of the present application, the drawings that need to be used in the embodiments of the present application will be briefly introduced below, and it is obvious that the drawings described below are only some embodiments of the present application, and for those skilled in the art, other drawings can also be obtained according to the drawings without paying creative labor.
FIG. 1 is a schematic diagram of a secondary battery according to an embodiment of the present application.
FIG. 2 is an exploded view of the secondary battery according to an embodiment of the present application shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to an embodiment of the present application shown in FIG. 4.
FIG. 6 is a schematic diagram of an electrical device using a secondary battery as a power supply according to an embodiment of the present application.

The accompanying drawings are not drawn to actual scale.

Reference numerals:
1. Battery pack; 2. Upper box; 3. Lower box; 4. Battery module; 5. Secondary battery; 51. Case; 52. Electrode assembly; 53. Top cover assembly.

### DETAILED DESCRIPTION

Embodiments of the present application are described in further detail below in conjunction with the drawings and embodiments. The detailed descriptions and accompanying drawings of the following embodiments are used for illustrating the principles of the present application, but cannot be used for limiting the scope of the present application, i.e., the present application is not limited to the embodiments described.

Embodiments of a non-aqueous electrolyte solution, a secondary battery and an electrical apparatus of the present application are specifically described below in detail with appropriate reference to the accompanying drawings. However, there may be cases where unnecessary elaboration is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed herein, and "0-5" is only a shortened representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all the embodiments and optional embodiments of the present application can be combined with each other form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), which means that the method may comprise steps (a) and (b) performed in order, or may comprise steps (b) and (a) performed in order. For example, reference to "the method may further include step (c)" indicates that step (c) may be added to the method in any order, for example, the method may comprise steps (a), (b), and (c), or steps (a), (c), and (b), or steps (c), (a), and (b), etc.

Unless otherwise specifically stated, "including" and "comprising" mentioned in the present application indicate either open inclusion or closed inclusion. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, condition "A or B" is met by either of the following: A is true (or exists) and B is false (or does not exist); A is false (or non-existent) and B is true (or exists); or both A and B are true (or exist).

### [Secondary battery]

In a first aspect, the present application provides a secondary battery which includes a non-aqueous electrolyte solution, and the non-aqueous electrolyte solution includes an additive which includes a cyclic sulfate compound having a structure shown in a general formula (I), 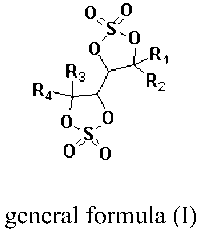 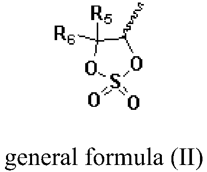
in which, R¹, R², R³ and R⁴ are independently selected from any one of groups having the structure shown in a general formula (II), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups;
R⁵ and R⁶ are independently selected from any one of groups having the structure shown in the general formula (II), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups;
the positive electrode plate includes a positive electrode material layer which includes the lithium supplement, and the lithium supplement includes but not is limited to one or more of Li₂M¹O₂, Li₂M²O₃, Li₃M³O₄, Li₅M⁴O₄ and Li₆M⁵O₄, in which, M¹ includes one or more of Ni, Co, Fe, Mn, Zn, Mg, Ca, and Cu; M² includes one or more of Mn, Sn, Mo, Ru, and Ir; M³ includes one or more of V, Nb, Cr, and Mo; M⁴ includes one or more of Fe, Cr, V, and Mo; M⁵ includes one or more of Co, V, Cr, and Mo; and in the Li₂M¹O₂, Li₂M²O₃, Li₃M³O₄, Li₅M⁴O₄, and Li₆M⁵O₄, the valence state of each metal element except Li is lower than the highest oxidation valence state of the metal element.

The secondary battery is also called as a rechargeable battery or a storage battery, which refers to a battery that, after being discharged, can activate an active material by charging for continued use. Generally, the secondary battery includes a positive electrode plate, a negative electrode plate, a separator and an electrolyte. During charging and discharging of the battery, active ions (e.g., lithium ions) are intercalated and deintercalated back and forth between the positive electrode plate and the negative electrode plate. The separator is arranged between the positive electrode plate and the negative electrode plate, and mainly functions to prevent a short circuit between the positive electrode and the negative electrode while allowing active ions to pass through. The electrolyte solution is located between the positive electrode plate and the negative electrode plate, and mainly plays a role in conducting the active ions.

As described above, due to the presence of the lithium supplement, the battery has an oxygen release behavior, which leads to oxidative decomposition of the electrolyte solution to generate the byproduct RH⁺; on one hand, the byproduct will further reduce and consume lithium at the negative electrode, and on the other hand, the SEI film at the negative electrode will be damaged, which will intensify the reaction between the negative electrode and the electrolyte solution, resulting in the problems of interface black spots, local lithium precipitation and the like. In order to solve above problems, in the present invention, the electrolyte solution containing the cyclic sulfate compound is used under the condition of adding the lithium supplement material to the positive electrode, and by utilizing the characteristic that the cyclic sulfate compound forms films at the positive and negative electrodes, on one hand, a flexible CEI with an S-O bond is formed on the positive electrode to wrap the surface of a lithium-rich metal oxide, so as to reduce RH⁺; and on the other hand, the SEI containing film inorganic structures like lithium sulfite is generated on the negative electrode to avoid the continuous damage of the RH⁺ to the SEI at the negative electrode, thus prolonging the cycle life of the battery.

### [Non-aqueous electrolyte solution]

In the present application, the secondary battery includes the non-aqueous electrolyte solution which includes the additive, and the additive includes the cyclic sulfate compound having the structure shown in the general formula (I). The cyclic sulfate rings in the general formula (I) are all five-membered rings, which can form a more dense SEI film.

In the general formula (I), R¹, R², R³ and R⁴ can be alkyl groups or F- or N-containing substituent groups; alkyl substituent groups and the like can be introduced to generate an elastic SEI film with a longer organic chain at the negative electrode, and therefore, the change in volume of the negative electrode in the cycling process can be solved, and the damage to the SEI film can be avoided; the F- and N-containing substituent groups can be introduced to participate in film formation at the negative electrode, and the SEI film rich in LiF, Li₃N and more inorganic components can be generated, the mechanical strength of the SEI film is improved, furthermore, the stability of the SEI film at the negative electrode is improved, and the purpose of further improving the cycling performance of the battery is further improved.

The alkyl groups can be linear alkyl groups, branched alkyl groups or naphthenic base, including but not limited to methyl groups, ethyl groups, propyl groups, isopropyl groups, N-butyl groups, isobutyl groups, cyclopropanealkyl groups, cyclobutyl groups and the like; the alkyl groups in the halogenated alkyl groups includes but not limited to linear alkyl groups, branched alkyl groups or naphthenic base, such as methyl groups, ethyl groups, propyl groups, isopropyl groups, N-butyl groups, isobutyl groups, cyclopropanealkyl groups, cyclobutyl groups and the like; the halogen atoms can be fluorine atoms, chlorine atoms or bromine atoms, and the halogen atoms substitute any one or more hydrogen atoms on the alkyl groups; the alkoxy groups include but not limited to cyclopropanealkyl groups, oxetanyl groups and the like; the halogen atoms in the haloalkoxy groups can be fluorine atoms, chlorine atoms or bromine atoms, and the halogen atoms substitute any one or more hydrogen atoms on the alkoxy groups; the alkenyl groups include but not limited to -CH=CH₂, -CH=CH₂CH₃, -CH₂CH=CH₂, and -CH₂CH=CH₂CH₃; and the ester groups include but not limited to methyl formate groups, ethyl formate groups, ethyl acetate groups, methyl propionate groups, ethyl propionate groups, propyl propionate groups and the like.

In some embodiments, R¹, R², R³ and R⁴ are independently selected from any one of groups having the structure shown in the general formula (II), hydrogen atoms, halogen atoms, C1-C3 alkyl groups, C1-C3 haloalkyl groups, C1-C3 alkoxy groups, C1-C3 haloalkoxy groups, C2-C3 alkene groups, C2-C3 ester groups, cyano groups, and sulfonic acid groups; and
R⁵ and R⁶ are independently selected from any one of hydrogen atoms, halogen atoms, C1-C3 alkyl groups, C1-C3 haloalkyl groups, C1-C3 alkoxy groups, C1-C3 haloalkoxy groups, C2-C3 alkene groups, C2-C3 ester groups, cyano groups, and sulfonic acid groups.

In some embodiments, R¹R², R³ and R⁴ are independently selected from any one of groups having the structure shown in the general formula (II), hydrogen atoms, halogen atoms, C1-C3 alkyl groups and cyano groups.

In some embodiments, R⁵ and R⁶ are independently selected from any one of hydrogen atoms and C1-C3 alkyl groups.

In some embodiments, R¹ R², R³ and R⁴ are independently selected from any one of groups having the structure shown in the general formula (II), hydrogen atoms, F atoms, Cl atoms, Br atoms, methyl groups, ethyl groups, propyl groups, isopropyl groups and cyano groups.

In some embodiments, R⁵ and R⁶ are independently selected from any one of hydrogen atoms, methyl groups, ethyl groups, propyl groups and isopropyl groups.

In some embodiments, the groups having the structure shown in the general formula (II) are selected from any one of the following groups: 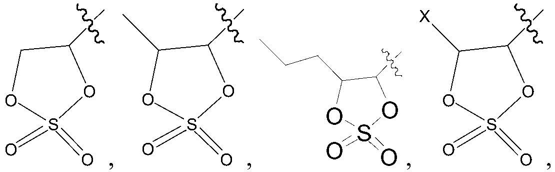 in which, X refers to F atoms, Cl atoms or Br atoms.

In some embodiments, the groups having the structure shown in the general formula (II) are selected from any one of the following groups:

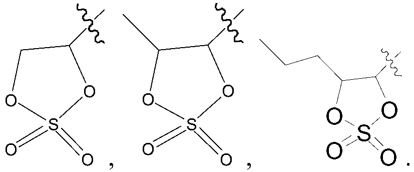

In some embodiments, the cyclic sulfate compound is selected from any one or more of the following compounds:

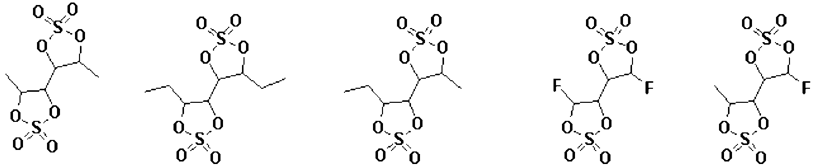

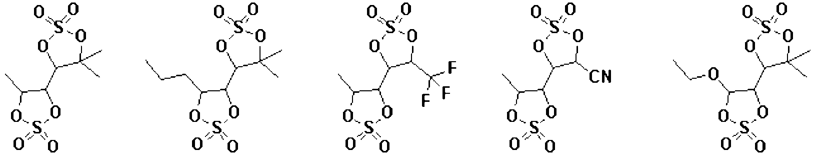

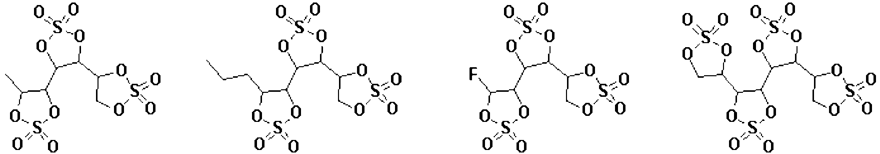

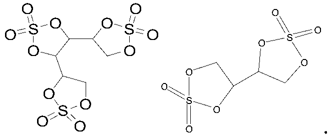

A preparation method of the cyclic sulfate compound is simpler, and it is easier to popularize and implement in industry, and has a more stable effect of improving the cycling performance of the secondary battery.

In some embodiments, R¹ and R² are not hydrogen atoms at the same time, and R³ and R⁴ are not hydrogen atoms at the same time;
In some embodiments, R¹, R², R³, R⁴, R⁵ and R⁶ meet the following conditions:
R¹ and R² are hydrogen atoms at the same time, one of R³ and R⁴ is the hydrogen atoms, and the other one is any one of groups having the structure shown in the general formula (II), halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups, and R⁵ and R⁶ in the groups having the structure shown in the general formula (II) are not hydrogen atoms at the same time.

In some embodiments, R¹, R², R³, R⁴, R⁵ and R⁶ meet the following conditions:
R³ and R⁴ are hydrogen atoms at the same time, one of R¹ and R² is the hydrogen atoms, and the other one is any one of groups having the structure shown in the general formula (II), halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups, and R⁵ and R⁶ in the groups having the structure shown in the general formula (II) are not hydrogen atoms at the same time.

In some embodiments, R⁵ and R⁶ are independently selected from groups other than the groups having the structure shown in the general formula (II).

In the present invention, the content of the cyclic sulfate compound in the non-aqueous electrolyte solution can be random content. In some embodiments, the mass content of the cyclic sulfate compound in the non-aqueous electrolyte solution is W1, in which, 0.005%≤W1≤10%, optionally, 0.05%≤W1≤5%. The cyclic sulfate compound in the above content range has an obvious effect of improving the cycling performance, and the battery cell has relatively good performance.

In some embodiments, W1 can be less than 0.001%, or 0.001%-0.005%, 0.005%-0.01%, 0.01%-0.05%, 0.05%-1%, 1%-2%, 2%-3%, 3%-5%, 5%-8%, 8%-10%, and 10%-15%, or greater than 15%.

In some embodiments, the non-aqueous electrolyte solution adopted in the present invention also includes an electrolyte, and any electrolyte which can be usually used in the non-aqueous electrolyte solution can be considered to be applied to the non-aqueous electrolyte solution in the present application. Those skilled in the art can select according to a battery system in which the non-aqueous electrolyte solution is applied, for example, a conventional electrolyte suitable for the secondary battery is selected. In some embodiments, the electrolyte includes an alkali metal salt electrolyte; optionally, the electrolyte includes lithium salt; and optionally, the lithium salt includes one or more selected from a group consisting of lithium hexafluorophosphate, lithium perchlorate, lithium hexafluoroarsenate, lithium bis(fluorosulfonyl)imide and lithium bis(trifluoromethanesulfonyl)imide. The lithium salt can be used independently, and can also be used by mixing two or more than two.

The content of the electrolyte in the non-aqueous electrolyte solution can refer to the content of the electrolyte in the conventional non-aqueous electrolyte solution; and in some embodiments, the content of the electrolyte in the non-aqueous electrolyte solution is 0.1-5 mol/L, for example, 0.1 mol/L, 0. 3 mol/L, 0.5 mol/L, 0.6 mol/L, 0.7 mol/L, 0.8 mol/L, 0.9 mol/L, 1 mol/L, 1.5 mol/L, 2 mol/L, 2.5 mol/L, 3 mol/L, 4 mol/L or 5 mol/L.

In some embodiments, the non-aqueous electrolyte solution further includes a non-aqueous solvent, and optionally, the non-aqueous solvent includes any one or more selected from a group consisting of cyclic carbonate, chain carbonate, a nitrile solvent, a ketone solvent and a sulfone solvent; and further optionally, the non-aqueous solvent includes one or more selected from a group consisting of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, ethyl sulfone, tetrahydrofuran, ethylene glycol dimethyl ether, dioxolane, acetone, acetonitrile and butyronitrile. The non-aqueous solvent can be used independently or used in a manner of mixing two or more, for example, in order to improve the load characteristic and low-temperature characteristic of the secondary battery, a mixed solvent of cyclic carbonate and chain carbonate can be adopted. In some embodiments, EC+EMC (ethylene carbonate + methyl ethyl carbonate) is adopted as the non-aqueous solvent.

When the non-aqueous electrolyte solution in the present application is applied to a solid battery, a solid solvent such as dimethyl sulfone can be adopted.

In addition to the above additives, the additives can further include a negative electrode film-forming additive and a positive electrode film-forming additive, and can further include additives that can improve certain performances of the battery, such as an additive that can improve the overcharge performance of the battery, an additive that can improve the high-temperature or low-temperature performance of the battery. In some embodiments, the additives further include but are not limited to one or more selected from a group consisting of a sulfate compound, a sulfite compound, a sultone compound, a disulfonic acid compound, a nitrile compound, an aromatic compound, an isocyanate compound, a phosphazene compound, a cyclic anhydride compound, a phosphite compound, a phosphate compound, a borate compound and a carboxylate compound.

### [Preparation method of cyclic sulfate compound having structure shown in general formula (I)]

In the present application, a preparation method of the cyclic sulfate compound having the structure shown in the general formula (I) refers to the following synthetic route: 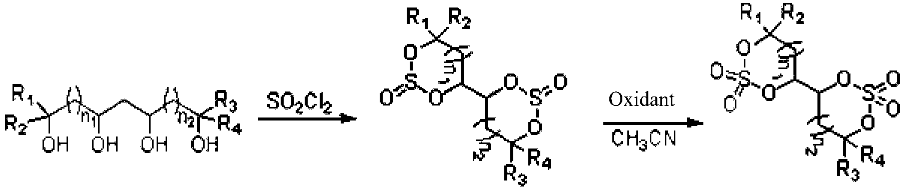 in which, the reaction temperature in the first step is controlled to be 30-60°C; the reaction temperature in the second step is controlled to be 10-30°C, and in the second step, a catalyst such as ruthenium trichloride trihydrate is used for catalysis, and an oxidant can be sodium hypochlorite, ozone and the like.

### [Positive electrode plate]

In order to improve the energy density of the lithium-ion battery, in the present invention, the lithium-rich metal oxide is added to the positive electrode material layer of the positive electrode plate to serve as the lithium supplement. The lithium-rich metal oxide which can be used as the lithium supplement includes but is not limited to one or more of Li₂M¹O₂, Li₂M²O₃, Li₃M³O₄, LisM⁴O₄, and Li₆M⁵O₄ as described above.

In some embodiments, the lithium supplement includes but is not limited to one or more of Li₂M¹O₂, Li₅M⁴O₄ and Li₆M⁵O₄, in which, M¹ includes one or more of Ni, and Cu; M⁴ includes one or more of Fe, Cr, V, and Mo; and M⁵ includes one or more of Co, V, Cr, and Mo.

In some embodiments, Li₂M¹O₂ is Li₂CuₓNi_{y}O₂, in which, x+y=1. In some embodiments, x is 0, 0.1, 0.2, 0.3, 0.4, 0.5, 0.6, 0.7, 0.8, 0.9 or 1. In some embodiments, y is 0, 0.1, 0.2, 0.3, 0.4, 0.5, 0.6, 0.7, 0.8, 0.9 or 1.

In some embodiments, the lithium supplement includes but is not limited to one or more of Li₂Cu_{0.6}Ni_{0.4}O₂, Li₂CuO₂, Li₂NiO₂, Li₅FeO₄, and Li₆CoO₄. The lithium supplement is matched with a proper amount of cyclic sulfate compounds to achieve the effects of improving the capacity exertion and cycling performance of the lithium-ion battery.

In some embodiments, the mass ratio of the lithium supplement in the positive electrode material layer is W₂, in which, 0.1%≤W₂≤10%, optionally, 1%≤W₂≤8%, and optionally, 1%≤W₂≤5%. When the lithium supplement is in the above preferred range of the ratio, the battery cell can exert excellent performance in capacity testing and cycling.

In some embodiments, W₂ may be less than 0.05%, or is 0.05%-0.1%, 0.1%-0.2%, 0.2%-1%, 1%-2%, 2%-3%, 3%-5%, 5%-6%, 6%-8%, 8%-9%, 9%-10%, and 10%-15%, or larger than 15%

The active specific surface area of the positive electrode plate can represent the number of active sites of the positive electrode plate participating in reaction in the charge-discharge process. In some embodiments, the active specific surface area of the positive electrode plate is B, in which, 0<B≤20 m²/g, and optionally, 2 m²/g≤B ≤10 m²/g. When the active specific surface area of the positive electrode plate is in the above preferred range, the oxidation capacity of the positive electrode plate on the electrolyte solution can be reduced, thus the gas production rate of the first cycle is reduced, and the generation of RH⁺ in the electrolyte solution is reduced, and as a result, the problems of black spots on a negative electrode interface and local lithium plating of the negative electrode are relieved; moreover, the polarization of the electrode plate is not obviously increased, and therefore, the energy density and performance of the battery can be improved under the condition that the battery has high dynamics.

In some embodiments, the active specific surface area of the positive electrode plate can be less than 1 m²/g, or is 1 m²/g-2 m²/g, 2 m²/g-4 m²/g, 4 m²/g-8 m²/g, 8 m²/g-10 m²/g, 10 m²/g-15 m²/g, 15 m²/g-20 m²/g, and 20 m²/g-30 m²/g, or larger than 30 m²/g.

The active specific surface area B of the positive electrode plate can be obtained by the following test method, and the test method includes the following steps:
assembling the positive electrode plate, the negative electrode plate and the electrolyte solution which are to be tested into a button half cell, in which, the electrolyte solution contains electrochemical redox probe molecules with the concentration of c, the redox potential of the probe molecules is 2-4 V, and the probe molecules are dissolved in the electrolyte solution; testing by an electrochemical workstation to obtain a series of linear scanning voltage-current curves of different button half cells at different scanning speeds V so as to obtain oxidation peak current ip (oxidation) and reduction peak current ip (reduction), and then drawing by the square roots of the obtained peak current ip and the scanning speed V of the series of button half cells to obtain a slope K; and computing according to a Randles Sevick equation ip=2 .69*105*n^{2/3}cD^{1/ 2}AV^{1/2}, in which, ip represents the peak current, n represents the electron transfer number, D represents the diffusion coefficient, D (oxidation) = 1 .41*10⁶ cm²/s, D (reduction) = 1 .26*10⁶ cm²/s, V represents the scanning speed, A represents the active surface area of the positive electrode plate, and c represents the concentration of the probe molecules. The active specific surface area A of the positive electrode plate is divided by the weight m of the positive electrode plate to obtain the active specific surface area B of the positive electrode plate.

In the above test method, the negative electrode is a metal lithium plate with the thickness of 0.4 mm. The electrolyte solution is a common electrolyte solution, and ethylene carbonate (EC), ethyl methyl carbonate (EMC) and diethyl carbonate (DEC) are mixed according to the volume ratio of 1:1:1, and then fully dried lithium salt LiPF₆ is dissolved in a mixed organic solvent according to the proportion of 1 mol/L.

In the above test method, the probe molecules are preferably ferrocene, and the redox potential of the probe molecules is 2-4 V. The concentration of the probe molecules is 0.05 mol/L.

According to the above method, the peak currents of the oxidation peak and the reduction peak are obtained by testing a cyclic voltage-current curve of a ferrocene solution on the surface of the active material at different scanning speeds, and the slope is obtained by fitting the current i and the scanning speed V, and therefore, the reaction activity specific surface area of the electrode plate can be computed. According to this method, iron ions are used as pointer elements, oxidation/reduction sites of the iron ions on the surface of the electrode plate are used as electrode plate active sites, and a linear relationship is established according to the Randles Sevick equation and the cyclic voltage-current curve so as to obtain the active reaction area.

In the above test method, the scanning speed is 0.01-3.50 mV/s, the scanning voltage range is 2.9-3.5 V, D (oxidation) = 1.41×10⁶ cm²/s, and D (reduction) = 1.26×10⁶ cm²/s.

The positive electrode plate generally includes a positive electrode current collector and a positive electrode material layer arranged on at least one surface of the positive electrode current collector.

As an example, the positive electrode current collector has two opposite surfaces in the thickness direction, and the positive electrode material layer is arranged on any one or both of the two opposite surfaces of the positive electrode current collector.

In some embodiments, the positive electrode current collector can be a metal foil or a composite current collector. For example, an aluminum foil may be used as the metal foil. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may comprise at least one of the following materials: a lithium-comprising phosphate of olivine structure, a lithium transition metal oxide, and a respective modified compound thereof. However, the present application is not limited to these materials, and other conventional materials that can be used as positive electrode active materials for batteries may also be used. Only a single one of or a combination of two or more of these positive electrode active materials can be used. Examples of lithium transition metal oxides may include, but are not limited to, at least one of a lithium-cobalt oxide (such as LiCoO₂), a lithium-nickel oxide (such as LiNiO₂), a lithium-manganese oxide (such as LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), a lithium-nickel-cobalt-aluminum oxide (such as LiNi_{0.85}Co_{0.15}Al_{0.05}O₂), and a modified compound thereof. Examples of lithium-containing phosphates of olivine structure may comprise, but are not limited to, at least one of lithium iron phosphate (e.g., LiFePO₄ (also abbreviated as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the positive electrode film layer optionally includes the binder. As an example, the binder can include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and fluorine~ acrylate resin.

In some embodiments, the positive electrode film layer also optionally includes the conductive agent. As an example, the conductive agent can include at least one of superconducting carbon, acetylene black, carbon black, Ketjen black, carbon dots, carbon nanotubes, graphene and carbon nanofibers.

In some embodiments, the positive electrode plate can be prepared by the following steps: dispersing the components for preparing the positive electrode plate, such as the positive electrode active material, the conductive agent, the binder and any other component, in a solvent (such as N~ pyrrolidone) to form positive electrode slurry; and coating a positive electrode current collector with the positive electrode slurry performing drying, cold pressing and other processes to obtain the positive electrode plate.

### [Negative electrode plate]

In the present invention, the secondary battery can also include a negative electrode plate which includes a negative electrode material layer, and the negative electrode material layer includes a negative electrode active material.

The particle size of the negative electrode active material can be represented with Dv50, and Dv50 refers to the corresponding particle size when the cumulative volume percentage reaches 50%, namely the median particle size in volume distribution. In some embodiments, the average particle size Dv50 of the negative electrode active material is 3-25 µm; and optionally, 5µm≤Dv50≤20µm, and optionally, 7µm≤Dv50≤15µm. When the negative electrode active material Dv50 is in the preferred range, a uniform surface can be formed when the electrode plate is coated and prepared, meanwhile, the side reaction on the negative electrode of the battery is reduced, the repeated damage to the SEI is reduced, the lithium consumption is reduced, the loss of the battery capacity is reduced, the cycle life is kept, and the battery can play better performance.

In some embodiments, Dv50 can be less than 3 µm, or is 3 µm-5µm , 5µm-6µm, 6µm-7µm, 7µm-8µm, 8µm-10µm, 10µm-15µm, 15µm-20µm, 20 µm-25 µm, and 25 µm-28 µm, or larger than 28 µm.

Dv50 can be measured by instruments and methods that are well known in the art. For example, a laser diffraction particle size distribution measurement apparatus (Malvern Mastersizer 3000) of Malvern Instruments Co., Ltd. can be used for testing, and the particle size distribution is measured according to the particle size distribution laser diffraction method GB/T19077-2016, and thus Dv50 is obtained.

The negative electrode plate can include a negative electrode current collector and a negative electrode material layer arranged on at least one surface of the negative electrode current collector, and the negative electrode material layer includes the negative electrode active material.

As an example, the negative electrode current collector has two opposite surfaces in the thickness direction, and the negative electrode material layer is arranged on any one or both of the two opposite surfaces of the negative electrode current collector.

In some embodiments, the negative electrode current collector may be a metal foil or a composite current collector. For example, a copper foil may be used as the metal foil. The composite current collector can comprise a polymer material substrate layer and a metal layer formed on at least one surface of the polymer material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material which is known in the field and used for the battery. As an example, the negative electrode active material can include at least one of the following materials: graphite (artificial graphite, and natural graphite), soft carbon, hard carbon, a silicon-based material, a tin-based material, lithium titanate and the like. The silicon-based material can include at least one of monatomic silicon, a silicon-oxygen compound, a silicon-carbon compound, a silicon-nitrogen compound and a silicon alloy. The tin-based material may be selected from at least one of elemental tin, tin-oxygen compound, and tin alloy. However, the present application is not limited to these materials, and other conventional materials useful as negative electrode active materials for batteries can also be used. These negative electrode active materials may be used alone or in a combination of two or more thereof.

In some embodiments, the negative electrode film layer further optionally include a binder. As an example, the binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, carbon dot, carbon nanotube, graphene, and carbon nanofiber.

In some embodiments, the negative electrode film layer further optionally includes other adjuvants, for example, a thickener (such as sodium carboxymethyl cellulose (CMC-Na)).

In some embodiments, the negative electrode plate may be prepared by: dispersing the above components, such as the negative electrode active material, the conductive agent, the binder and any other component, for preparing the negative electrode plate in a solvent (such as deionized water) to form a negative electrode slurry; and coating the negative electrode slurry on the negative electrode current collector, and performing drying and cold pressing processes to obtain the negative electrode plate.

### [Separator]

In some embodiments, the secondary battery further comprises a separator. The type of the separator is not particularly limited in the present application, and any well-known separator with a porous structure having good chemical stability and mechanical stability can be selected.

In some embodiments, the material of the separator can be selected from at least one of glass fibers, non-woven fabric, polyethylene, polypropylene, and polyvinylidene fluoride. The separator can be either a single-layer thin film or a multilayer composite thin film without special limitations. When the separator is a multilayer composite thin film, the materials of the layers can be the same or different without special limitations.

In some embodiments, the positive electrode plate, the negative electrode plate, and the separator can be made into an electrode assembly by a winding process or a lamination process.

In some embodiments, the secondary battery can comprise an outer package. The outer packaging can be used for encapsulating the above electrode assembly and electrolyte.

In some embodiments, the outer package of the secondary battery can be a hard shell, such as a hard plastic shell, an aluminum shell, or a steel shell. The outer package of the secondary battery can also be a soft package, such as a pouch-type soft package. The material of the soft package can be plastic, and examples of the plastic can include polypropylene, polybutylene terephthalate, polybutylene succinate, etc.

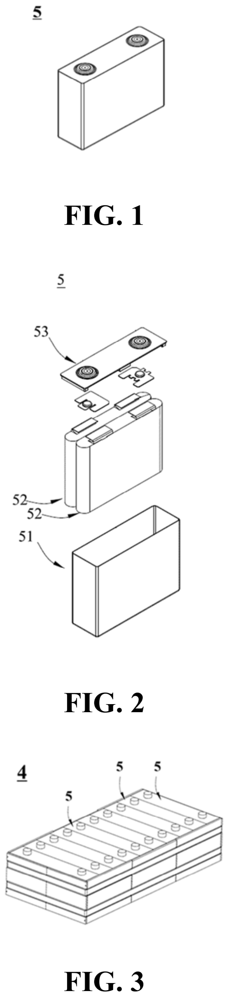

The shape of the secondary battery is not particularly limited in the present application, and may be a cylinder, a square, or any other shape. For example, FIG. 1 shows a secondary battery 5 with a square structure as an example.

In some embodiments, referring to FIG. 2, the outer package may comprise a case 51 and a cover plate 53. The case 51 may comprise a bottom plate and a side plate connected to the bottom plate, which enclose to form an accommodating cavity. The case 51 has an opening that communicates with the accommodating cavity, and the cover plate 53 may cover the opening to close the accommodating cavity. The positive electrode sheet, the negative electrode sheet, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, and may be selected by those skilled in the art according to specific actual requirements.

In some embodiments, the secondary batteries may be assembled into a battery module, the number of secondary batteries comprised in the battery module may be one or more, and the specific number may be selected by those skilled in the art according to the application and capacity of the battery module.

Fig. 3 shows a battery module 4 as an example. Referring to Fig. 3, in the battery module 4, a plurality of secondary batteries 5 can be sequentially arranged along the length direction of the battery module 4. Of course, any other arrangements are also possible. The plurality of secondary batteries 5 may further be fixed by fasteners.

Optionally, the battery module 4 may further comprise a shell having an accommodating space, in which the plurality of secondary batteries 5 is accommodated.

In some embodiments, the above battery modules may be further assembled into a battery pack, the number of battery modules included in the battery pack may be one or more, and the specific number may be selected by those skilled in the art based on the application and capacity of the battery pack.

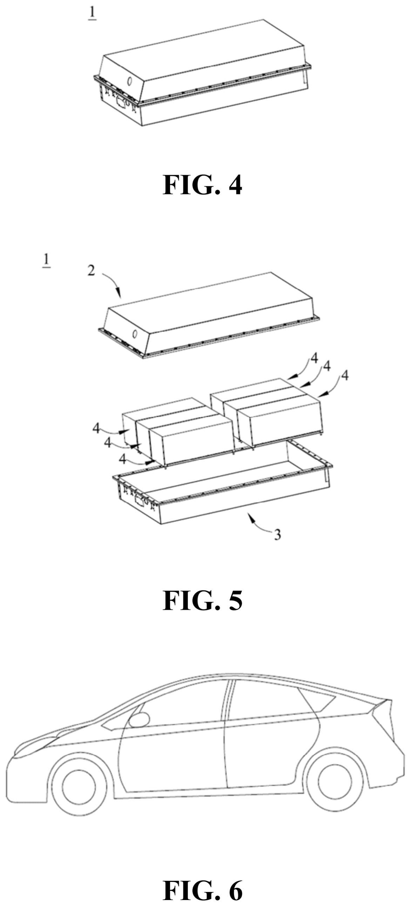

Figs. 4 and 5 show a battery pack 1 as an example. Referring to FIGs. 4 and 5, the battery pack 1 may comprise a battery box and a plurality of battery modules 4 provided in the battery box. The battery box comprises an upper box body 2 and a lower box body 3, wherein the upper box body 2 can cover the lower box body 3 to form an enclosed space for accommodating the battery module 4. The plurality of battery modules 4 may be arranged in the battery box in any manner.

In addition, the present application further provides an electrical apparatus, comprising at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus may comprise, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack may be selected according to its use requirements.

Fig. 6 is an example of an electrical apparatus. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

### [Examples]

Examples of the present application will be described below. The embodiments described below are illustrative and only used to explain the present application, and cannot be construed as limiting the present application. If the specific technology or conditions are not indicated in the embodiments, the technology or conditions described in the literature in the art or in accordance with the product specification shall be followed. If the manufacturer of the agents or instruments used is not indicated, they are all conventional products that can be obtained through commercial purchase, and the rest of the agents or compound information are recorded in Table 1.

**Table 1**

| Materials | Structural formula | CAS No. |
|---|---|---|
| 1,6-dideoxygalactitol | 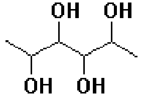 | 25289-20-7 |
| 3,4,5,6-octaerythriol | 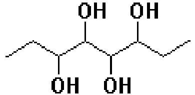 | 2165939-88-6 |
| 2,3,4,5-heptaerythriol | 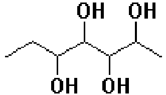 | 2629309-49-3 |
| Compound 8 | 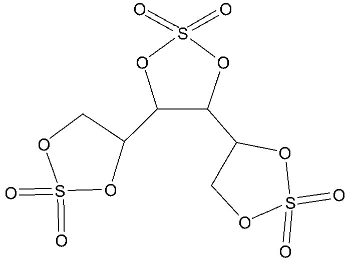 | 2793408-99-6 |
| Compound 9 | 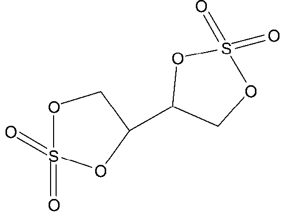 | 1431298-10-0 |

### Synthesis examples

In the present application, a preparation method of a cyclic sulfate compound having the structure shown in a general formula (I) refers to the following synthetic route: 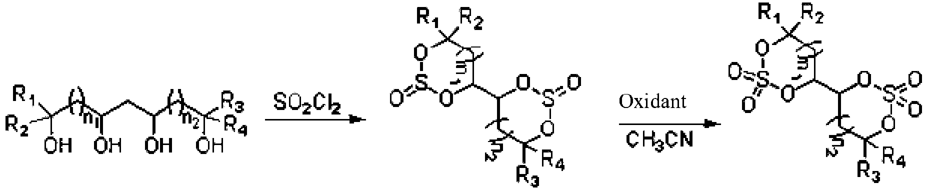 in which, the reaction temperature in the first step is controlled to be 30-60°C; the reaction temperature in the second step is controlled to be 10-30°C, and in the second step, a catalyst such as ruthenium trichloride trihydrate is used for catalysis, and an oxidant can be sodium hypochlorite, ozone and the like.

### Synthesis example 1: Synthesis of compound 1

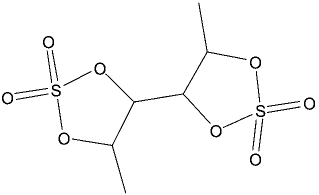

Step 1: adding 300 g (2 mol) of solid 1,6-dideoxygalactitol to a 5L three-necked flask; starting stirring; adding dropwise 523 g (4.4 mol) of thionyl chloride to the three-necked flask, in which, the temperature was controlled at about 15°C in the adding dropwise process; reacting at temperature maintained at 45°C for 4 h after adding dropwise, in which, a large amount of pasty solids were separated out from the reaction liquid; slowly adding dropwise 1 L of deionized water after cooling; quickly stirring and scattering the reaction system; pulping and washing the solids obtained by filtering with deionized water for multiple times until the pH was neutral; and drying the filter cake at 60°C under reduced pressure to obtain an intermediate product 1.

Step 2: adding 184.2 g (0.8 mol) of the intermediate product 1 to a 3L three-necked flask; adding 1000 mL of acetonitrile; adding 80 mg of a ruthenium trichloride trihydrate catalyst; cooling the system to 20°C after nitrogen replacement; starting stirring; adding dropwise 2000 g of 20% sodium hypochlorite aqueous solution within 1 h; controlling the reaction temperature at 10-20°C; stirring at 10-20°C for 10 min after adding dropwise; separating the liquid; quenching the organic phase with a sodium sulfite aqueous solution until potassium iodide-starch test paper was not blue; separating the liquid again; concentrating the organic layer; and crystallizing with acetonitrile to obtain a white solid powder, namely the compound 1. 1H-NMR, CD₃CN, δ ppm 5.42-5.39 (m, 2H), 5.36-5.34 (m, 2H), 1.67-1.65 (d, 6H).

### Synthesis example 2: Synthesis of compound 2

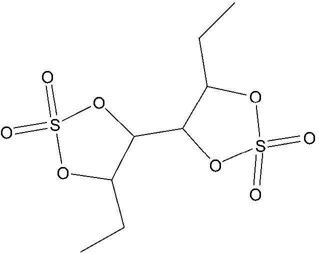

Step 1: adding 356.5 g (2 mol) of solid 3,4,5,6-octaerythriol to a 5L three-necked flask; starting stirring; adding dropwise 523 g (4.4 mol) of thionyl chloride to the three-necked flask, in which, the temperature was controlled at about 15°C in the adding dropwise process; reacting at temperature maintained at 45°C for 4 h after adding dropwise, in which, a large amount of pasty solids were separated out from the reaction liquid; slowly adding dropwise 1 L of deionized water after cooling; quickly stirring and scattering the reaction system; pulping and washing the solids obtained by filtering with deionized water for multiple times until the pH was neutral; and drying the filter cake at 60°C under reduced pressure to obtain an intermediate product 2.

Step 2: adding 216.2 g (0.8 mol) of the intermediate product 2 to a 3L three-necked flask; adding 1000 mL of acetonitrile; adding 80 mg of a ruthenium trichloride trihydrate catalyst; cooling the system to 20°C after nitrogen replacement; starting stirring; adding dropwise 2000 g of 20% sodium hypochlorite aqueous solution within 1 h; controlling the reaction temperature at 10-20°C; stirring at 10-20°C for 10 min after adding dropwise; separating the liquid; quenching the organic phase with a sodium sulfite aqueous solution until potassium iodide-starch test paper was not blue; separating the liquid again; concentrating the organic layer; and crystallizing with acetonitrile to obtain the compound 2.

### Synthesis example 3: Synthesis of compound 3

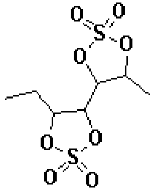

Step 1: adding 328.4 g (2 mol) of solid 2,3,4,5-heptaerythriol to a 5L three-necked flask; starting stirring; adding dropwise 523 g (4.4 mol) of thionyl chloride to the three-necked flask, in which, the temperature was controlled at about 15°C in the adding dropwise process; reacting at temperature maintained at 45°C for 4 h after adding dropwise, in which, a large amount of pasty solids were separated out from the reaction liquid; slowly adding dropwise 1 L of deionized water after cooling; quickly stirring and scattering the reaction system; pulping and washing the solids obtained by filtering with deionized water for multiple times until the pH was neutral; and drying the filter cake at 60°C under reduced pressure to obtain an intermediate product 3.

Step 2: adding 205 g (0.8 mol) of the intermediate product 3 to a 3L three-necked flask; adding 1000 mL of acetonitrile; stirring until the solid is completely dissolved; adding 80 mg of a ruthenium trichloride trihydrate catalyst; cooling the system to 20°C after nitrogen replacement; starting stirring; adding dropwise 2000 g of 20% sodium hypochlorite aqueous solution within 1 h; controlling the reaction temperature at 10-20°C; stirring at 10-20°C for 10 min after adding dropwise; separating the liquid; quenching the organic phase with a sodium sulfite aqueous solution until potassium iodide-starch test paper was not blue; separating the liquid again; concentrating the organic layer; and crystallizing with acetonitrile to obtain the compound 3 (163.1 g, yield: 82.8%).

In addition, the synthesis method of the following compounds refers to the Synthesis Example 1, and a corresponding substrate in Table 2 was adopted to replace 1,6-dideoxygalactitol.

**Table 2**

| Compound | Chemical formula | Substrate | Compound LC-MS |
|---|---|---|---|
| 4 | 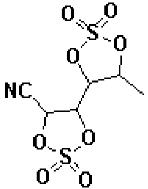 | 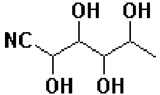 CAS No. : 7460-93-7 | 285.25 |

### Synthesis example 4: Synthesis of compound 5

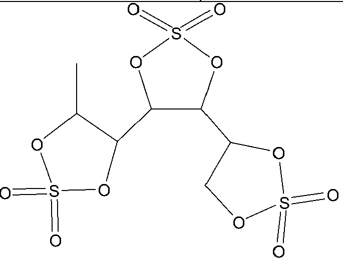

Step 1: adding 392.4 g (2 mol) of solid 1,2,3,4,5,6-heptahexanol to a 5L three-necked flask; starting stirring; adding dropwise 784.5 g (6.6 mol) of thionyl chloride to the three-necked flask, in which, the temperature was controlled at about 15°C in the adding dropwise process; reacting at temperature maintained at 45°C for 4 h after adding dropwise, in which, a large amount of pasty solids were separated out from the reaction liquid; slowly adding dropwise 1 L of deionized water after cooling; quickly stirring and scattering the reaction system; pulping and washing the solids obtained by filtering with deionized water for multiple times until the pH was neutral; and drying the filter cake at 60°C under reduced pressure to obtain an intermediate product 4.

Step 2: adding 140 g (0.4 mol) of the intermediate product 4 to a 4L three-necked flask; adding 1000 mL of acetonitrile; adding 110 mg of a ruthenium trichloride trihydrate catalyst; cooling the system to 20°C after nitrogen replacement; starting stirring; adding dropwise 1500 g of 20% sodium hypochlorite aqueous solution within 1 h; controlling the reaction temperature at 10-20°C; stirring at 10-20°C for 10 min after adding dropwise; separating the liquid; quenching the organic phase with a sodium sulfite aqueous solution until potassium iodide-starch test paper was not blue; separating the liquid again; concentrating the organic layer; and crystallizing with acetonitrile to obtain the compound 5.

In addition, the synthesis method of the following compounds refers to the Synthesis Example 4, and a corresponding substrate in Table 3 was adopted to replace 1,2,3,4,5,6-heptahexanol.

**Table 3**

| Compound | Chemical formula | Substrate | Compound LC-MS |
|---|---|---|---|
| 6 | 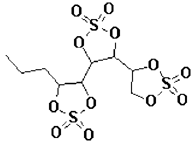 | 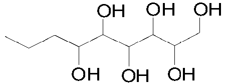 CAS No. : 2236586-56-2 | 410.38 |

### Synthesis example 5: Synthesis of compound 7

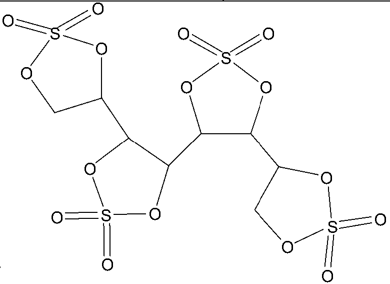

Step 1: adding 484 g (2 mol) of solid octitol to a 5L three-necked flask; starting stirring; adding dropwise 1046 g (8.8 mol) of thionyl chloride to the three-necked flask, in which, the temperature was controlled at about 15°C in the adding dropwise process; reacting at temperature maintained at 45°C for 4 h after adding dropwise, in which, a large amount of pasty solids were separated out from the reaction liquid; slowly adding dropwise 1 L of deionized water after cooling; quickly stirring and scattering the reaction system; pulping and washing the solids obtained by filtering with deionized water for multiple times until the pH was neutral; and drying the filter cake at 60°C under reduced pressure to obtain an intermediate product 5.

Step 2: adding 183.2 g (0.4 mol) of the intermediate product 5 to a 4L three-necked flask; adding 1000 mL of acetonitrile; adding 150 mg of a ruthenium trichloride trihydrate catalyst; cooling the system to 20°C after nitrogen replacement; starting stirring; adding dropwise 2000 g of 20% sodium hypochlorite aqueous solution within 1 h; controlling the reaction temperature at 10-20°C; stirring at 10-20°C for 10 min after adding dropwise; separating the liquid; quenching the organic phase with a sodium sulfite aqueous solution until potassium iodide-starch test paper was not blue; separating the liquid again; concentrating the organic layer; and crystallizing with acetonitrile to obtain the compound 7.

### Example 1

Electrolyte solution: the compound 1 was used as an additive, which had the mass content in the electrolyte solution of 2%; LiPF₆ was used as an electrolyte, which had the content in the electrolyte solution of 10%, and a mixture of EC + EMC (ethylene carbonate + methyl ethyl carbonate) with a volume ratio of 3:7 was used as the solvent.

### Preparation of positive electrode plate:

A positive electrode active material lithium iron phosphate (LiFePO₄), a lithium supplement (Li₂Cu_{0.6}Ni_{0.4}O₂), a conductive agent acetylene black, and a binder polyvinylidene fluoride (PVDF) were dissolved in a solvent N-methyl pyrrolidone (NMP) according to a weight ratio of 95:2:2:1, and were fully stirred and mixed uniformly to obtain positive electrode slurry; then the positive electrode slurry was uniformly coated on a positive electrode current collector; and then drying, cold pressing and slitting were carried out to obtain the positive electrode plate. The lithium supplement accounted for 2% of the mass of the positive electrode plate (except the current collector). The active specific surface area of the positive electrode plate was 8 m²/g.

Measurement of the active specific surface area of the positive electrode plate:
the active specific surface area of the positive electrode plate can accurately represent the number of active sites of the positive electrode plate participating in reaction in the charge-discharge processes.

The active specific surface area B of the positive electrode plate could be obtained by the following test method, and the test method included the following steps:
assembling the positive electrode plate, the negative electrode plate and the electrolyte solution which were to be tested into a button half cell, in which, the electrolyte solution contained electrochemical redox probe molecules with the concentration of c, the redox potential of the probe molecules was 2-4 V, and the probe molecules were dissolved in the electrolyte solution; testing by an electrochemical workstation to obtain a series of linear scanning voltage-current curves of different button half cells at different scanning speeds V so as to obtain oxidation peak current ip (oxidation) and reduction peak current ip (reduction), and then drawing by the square roots of the obtained peak current ip and the scanning speed V of the series of button half cells to obtain a slope K; and computing according to a Randles Sevick equation ip=2 .69*105*n^{2/3}cD^{1/2}AV^{1/2}, in which, ip represented the peak current, n represented the electron transfer number, D represented the diffusion coefficient, D (oxidation) = 1 .41*10⁶ cm²/s, D (reduction) = 1 .26*10⁶ cm²/s, V represented the scanning speed, A represented the active surface area of the positive electrode plate, and c represented the concentration of the probe molecules. The active specific surface area A of the positive electrode plate was divided by the weight m of the positive electrode plate to obtain the active specific surface area B of the positive electrode plate.

In the above test method, the negative electrode was a metal lithium plate with the thickness of 0.4 mm. The electrolyte solution was a common electrolyte solution, and ethylene carbonate (EC), ethyl methyl carbonate (EMC) and diethyl carbonate (DEC) were mixed according to the volume ratio of 1:1:1, and then fully dried lithium salt LiPF₆ was dissolved in a mixed organic solvent according to the proportion of 1 mol/L.

In the above test method, the probe molecules were ferrocene, and the redox potential of the probe molecules was 2-4 V. The concentration of the probe molecules was 0.05 mol/L.

According to the above method, the peak currents of the oxidation peak and the reduction peak were obtained by testing a cyclic voltage-current curve of a ferrocene solution on the surface of the active material at different scanning speeds, and the slope was obtained by fitting the current i and the scanning speed V, and therefore, the reaction activity specific surface area of the electrode plate could be computed. According to this method, iron ions were used as pointer elements, oxidation/reduction sites of the iron ions on the surface of the electrode plate were used as electrode plate active sites, and a linear relationship was established according to a Randles Sevick equation and the cyclic voltage-current curve so as to obtain the active reaction area.

In the above test method, the scanning speed is 0.01-3.50 mV/s, the scanning voltage range is 2.9-3.5 V, D (oxidation) = 1.41×10⁶ cm²/s, and D (reduction) = 1.26×10⁶ cm²/s.

Preparation of negative electrode plate:
a negative electrode active material graphite (average particle size Dv50 was 10 µm), a conductive agent carbon black, a binder butadiene styrene rubber (SBR), and a thickener sodium carboxymethyl cellulose (CMC-Na) were dissolved in a solvent deionized water according to a weight ratio of 90:4:4:2, and were mixed uniformly to prepare negative electrode slurry; and the negative electrode slurry was uniformly coated on a copper foil of a negative electrode current collector once or multiple times, and drying, cold pressing and slitting were carried out to obtain the negative electrode plate. Dv50 of the negative electrode active material refers to the corresponding particle size when the cumulative volume percentage of the negative electrode active material reaches 50%, namely the median particle size in the volume distribution, and the unit is µm. Dv50 can be measured by instruments and methods that are well known in the art. For example, a laser diffraction particle size distribution measurement apparatus (Malvern Mastersizer 3000) of Malvern Instruments Co., Ltd. can be used for testing, and the particle size distribution is measured according to the particle size distribution laser diffraction method GB/T19077-2016, and thus Dv50 is obtained.

### Separator:

A conventional polypropylene film was used as the separator.

### Assembling of lithium-ion battery:

The positive electrode plate, the separator and the negative electrode plate were sequentially stacked, the separator was positioned between the positive electrode plate and the negative electrode plate to play a separating role, and then the positive electrode plate, the isolating film and the negative electrode plate were wound to obtain an electrode assembly; and the electrode assembly was placed in a battery shell, the electrolyte solution was injected after drying, and then the lithium-ion battery was manufactured by processes such as formation and standing.

### Example 2-1

The compound 1 was replaced by the compound 2, and the rest was the same as that in the Example 1.

### Example 2-2

The compound 1 was replaced by the compound 3, and the rest was the same as that in the Example 1.

### Example 2-3

The compound 1 was replaced by the compound 4, and the rest was the same as that in the Example 1.

### Example 2-4

The compound 1 was replaced by the compound 5, and the rest was the same as that in the Example 1.

### Example 2-5

The compound 1 was replaced by the compound 6, and the rest was the same as that in the Example 1.

### Example 2-6

The compound 1 was replaced by the compound 7, and the rest was the same as that in the Example 1.

### Example 2-7

The compound 1 was replaced by the compound 8, and the rest was the same as that in the Example 1.

### Example 2-8

The compound 1 was replaced by the compound 9, and the rest was the same as that in the Example 1.

### Example 3-1

The mass content of the compound 1 was adjusted to be 0.001%, and the rest was the same as that in the Example 1.

### Example 3-2

The mass content of the compound 1 was adjusted to be 0.01%, and the rest was the same as that in the Example 1.

### Example 3-3

The mass content of the compound 1 was adjusted to be 3%, and the rest was the same as that in the Example 1.

### Example 3-4

The mass content of the compound 1 was adjusted to be 8%, and the rest was the same as that in the Example 1.

### Example 3-5

The mass content of the compound 1 was adjusted to be 15%, and the rest was the same as that in the Example 1.

### Example 4-1

A lithium supplement Li₂Cu_{0.6}Ni_{0.4}O₂ was replaced by a lithium supplement Li₂NiO₂, and the rest was the same as that in the Example 1.

### Example 4-2

A lithium supplement Li₂Cu_{0.6}Ni_{0.4}O₂ was replaced by a lithium supplement Li₂CuO₂, and the rest was the same as that in the Example 1.

### Example 4-3

A lithium supplement Li₂Cu_{0.6}Ni_{0.4}O₂ with the mass content of 2% was replaced by a lithium supplement Li₅FeO₄ with the mass content of 1.5%, the mass content of the positive active material was adjusted to 95.5%, and the rest was the same as that in the Example 1.

### Example 4-4

A lithium supplement Li₂Cu_{0.6}Ni_{0.4}O₂ with the mass content of 2% was replaced by a lithium supplement Li₆CoO₄ with the mass content of 1%, the mass content of the positive active material was adjusted to 96%, and the rest was the same as that in the Example 1.

### Example 5-1

The mass ratio of the lithium supplement in the positive electrode plate (except the current collector) was adjusted to 0.05%, and the rest was the same as that in the Example 1.

### Example 5-2

The mass ratio of the lithium supplement in the positive electrode plate (except the current collector) was adjusted to 0.2%, and the rest was the same as that in the Example 1.

### Example 5-3

The mass ratio of the lithium supplement in the positive electrode plate (except the current collector) was adjusted to 3%, and the rest was the same as that in the Example 1.

### Example 5-4

The mass ratio of the lithium supplement in the positive electrode plate (except the current collector) was adjusted to 6%, and the rest was the same as that in the Example 1.

### Example 5-5

The mass ratio of the lithium supplement in the positive electrode plate (except the current collector) was adjusted to 9%, and the rest was the same as that in the Example 1.

### Example 5-6

The mass ratio of the lithium supplement in the positive electrode plate (except the current collector) was adjusted to 15%, and the rest was the same as that in the Example 1.

### Example 6-1

The average particle size Dv50 of the negative electrode active material was adjusted to 3 µm, and the rest was the same as that in the Example 1.

### Example 6-2

The average particle size Dv50 of the negative electrode active material was adjusted to 6 µm, and the rest was the same as that in the Example 1.

### Example 6-3

The average particle size Dv50 of the negative electrode active material was adjusted to 8 µm, and the rest was the same as that in the Example 1.

### Example 6-4

The average particle size Dv50 of the negative electrode active material was adjusted to 15 µm, and the rest was the same as that in the Example 1.

### Example 6-5

The average particle size Dv50 of the negative electrode active material was adjusted to 20 µm, and the rest was the same as that in the Example 1.

### Example 6-6

The average particle size Dv50 of the negative electrode active material was adjusted to 25 µm, and the rest was the same as that in the Example 1.

### Example 6-7

The average particle size Dv50 of the negative electrode active material was adjusted to 28 µm, and the rest was the same as that in the Example 1.

### Example 6-8

The average particle size Dv50 of the negative electrode active material was adjusted to 2.5, and the rest was the same as that in the Example 1.

### Example 7-1

The active specific surface area of the positive electrode plate was adjusted to 1 m²/g, and the rest was the same as that in the Example 1.

### Example 7-2

The active specific surface area of the positive electrode plate was adjusted to 4 m²/g, and the rest was the same as that in the Example 1.

### Example 7-3

The active specific surface area of the positive electrode plate was adjusted to 15 m²/g, and the rest was the same as that in the Example 1.

### Example 7-4

The active specific surface area of the positive electrode plate was adjusted to 30 m²/g, and the rest was the same as that in the Example 1.

### Contrast Example 1-1

The compound 1 was not added, and the rest was the same as that in the Example 1.

### Performance test:

### 1) Capacity test of lithium-ion battery

The lithium-ion battery was charged to 4.2 V at constant current of 0.33 C at 25°C, then charged at constant voltage of 4.2 V until the current was ≤0.05C; and then the lithium-ion battery was discharged to 2.5 V at constant current of 0.33 C, and the actual capacity of the lithium-ion battery was recorded as C₀ (mAh). The gram capacity of the lithium-ion battery was C₀/W₃ (mAh/g), in which, W₃ is the mass (g) of the positive active material.

### 2) Test of cycling performance at 60°C

The lithium-ion battery was charged at constant current of 1 C at 60°C until the voltage was 3.65 V, and then charged at constant voltage of 3.65 V until the current was ≤0.05C, and then the battery was discharged at constant current of 1 C until the voltage was 2.5 V, which was a charge-discharge process; and the discharge capacity at the moment was recorded as the discharge capacity of the battery in the first cycle. The charge-discharge cycle was repeated, and the corresponding cycle number when the battery cycles to reach a capacity retention ratio of 80% was computed.

Capacity retention ratio (%) of battery after N time cycles at 60°C (%) = (discharge capacity of Nth cycle of battery/ discharge capacity of 1st cycle of battery) x 100%.

The test result is recorded in Table 4.

**Table 4**

| | Gram capacity exertion of lithium-ion battery (mAh/g) | Cycle number of lithium-ion battery cycles to reach capacity retention rate of 80% at 60°C |
|---|---|---|
| Example 1 | 148.6 | 1323 |
| Example 2-1 | 147.3 | 1232 |
| Example 2-2 | 146.8 | 1201 |
| Example 2-3 | 145.0 | 1127 |
| Example 2-4 | 144.4 | 1089 |
| Example 2-5 | 143.9 | 1215 |
| Example 2-6 | 147.5 | 1256 |
| Example 2-7 | 148.2 | 1306 |
| Example 2-8 | 146.2 | 1232 |
| Example 3-1 | 141.5 | 1030 |
| Example 3-2 | 142.0 | 1044 |
| Example 3-3 | 147.7 | 1287 |
| Example 3-4 | 145.2 | 1153 |
| Example 3-5 | 142.4 | 1035 |
| Example 4-1 | 148.0 | 1285 |
| Example 4-2 | 147.5 | 1256 |
| Example 4-3 | 154.3 | 1193 |
| Example 4-4 | 153.8 | 1205 |
| Example 5-1 | 138.6 | 988 |
| Example 5-2 | 140.5 | 1003 |
| Example 5-3 | 147.9 | 1274 |
| Example 5-4 | 146.3 | 1204 |
| Example 5-5 | 144.2 | 1130 |
| Example 5-6 | 140.4 | 1110 |
| Example 6-1 | 143.5 | 1076 |
| Example 6-2 | 144.7 | 1177 |
| Example 6-3 | 145.2 | 1259 |
| Example 6-4 | 145.9 | 1265 |
| Example 6-5 | 144.1 | 1239 |
| Example 6-6 | 142.7 | 1134 |
| Example 6-7 | 140.0 | 1017 |
| Example 6-8 | 141.4 | 1005 |
| Example 7-1 | 142.5 | 1099 |
| Example 7-2 | 144.9 | 1124 |
| Example 7-3 | 145.3 | 1226 |
| Example 7-4 | 143.1 | 1119 |
| Contrast Example 1-1 | 141.2 | 1025 |

The lithium supplement at the positive electrode was introduced into lithium iron phosphate to effectively compensate for the lithium consumption of the positive electrode and the negative electrode to form the SEI film, and improve the gram capacity exertion of the lithium-ion battery. However, the lithium supplement at the positive electrode will generate oxygen free radicals in the delithiation process, the oxygen free radicals further generate oxygen, and O₂⁻ and O₂ will also oxidize the electrolyte solution to generate the byproduct RH⁺; on one hand, the byproduct will further reduce and consume lithium at the negative electrode, and will also damage the SEI film at the negative electrode on the other hand, consequently, the reaction between the negative electrode and the electrolyte solution is intensified, resulting in the problems such as interface black spots and local lithium precipitation, then deteriorating the first efficiency and cycling performance of the battery cell. The results of the Example 1 and the Example 2-1 to the Example 2-8 and the results of the Contrast Example 1-1 show that the cyclic sulfate compound can form the film on the positive and negative electrodes to reduce the problem of increased lithium consumption caused by the reduction of by-products on the negative electrode or the damage to the SEI film, thereby relieving a series of problems such as abnormal battery cell capacity exertion and poor cycling performance.

The results of the Example 3-1 to the Example 3-5 show that in case of less cyclic sulfate compounds, the improvement effect is not obvious, and excessive cyclic sulfate compounds may increase the thickness of the films formed on the positive and negative electrodes, consequently, the polarization of the battery cell is increased, which will influence the capacity exertion to a certain extent, and deteriorate the cycling performance at high temperature. In the present application, when the mass ratio of the used cyclic sulfonate additive to the electrolyte solution is in the above preferred range, the battery cell can have better performance.

The results of the Example 4-1 to the Example 4-4 show that: by introducing a proper amount of other lithium supplements at the positive electrode such as Li₂CuO₂, Li₂NiO₂, Li₅FeO₄, and Li₆CoO₄ into lithium iron phosphate and matching a proper amount of cyclic sulfate compounds, the capacity exertion and the cycling performance of the lithium-ion battery can also be improved.

The results of the Example 5-1 to the Example 5-6 show that: in case of less lithium supplements at the positive electrode, the capacity and the cycling performance of the battery cell are improved limitedly. In case of excessive lithium supplements at the positive electrode, the positive electrode will release oxygen seriously, and produce a large number of electrolyte solution byproducts, which will damage the stability of the battery, resulting in poor performance. In the present application, when the proportion of the lithium supplements at the positive electrode is in the preferred range, the battery cell can exert excellent performance in capacity testing and cycling.

The results of the Example 6-1 to the Example 6-8 show that: when the Dv50 of the negative electrode active material is too small, resulting in excessive large specific surface area, the electrode may be in more contact with the electrolyte solution, thus the side reaction is more violent, the byproducts are accumulated on the surface of the electrode, which increases the impedance of the negative electrode, and as a result, the capacity loss of the battery under high-temperature cycle is increased. Therefore, when the Dv50 of the negative electrode active material is in the above preferred range, the battery can exert better performance.

The results of the Example 7-1 to the Example 7-4 show that: the reduction of the active specific surface area of the positive electrode plate may increase the polarization of the electrode plate, which is not favorable for exerting the capacity, but the overlarge active specific surface area of the positive electrode will improve the capacity of the positive electrode for oxidizing the electrolyte solution, and as a result, the cycle of the battery cell will be deteriorated and the capacity exertion will be influenced. Therefore, when the active specific surface area of the positive electrode plate is in the above preferred range, the energy density and performance of the battery can be improved under the condition that the battery has better dynamics.

Although the present application is described with reference to the preferred embodiments, without departing from the scope of the present application, various improvements may be made to it and parts therein may be replaced with equivalents. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A secondary battery, comprising a positive electrode plate and a non-aqueous electrolyte solution, wherein the non-aqueous electrolyte solution comprises an additive which comprises a cyclic sulfate compound having a structure shown in a general formula (I), 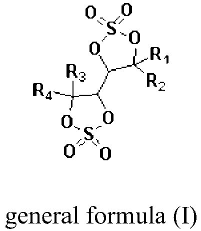 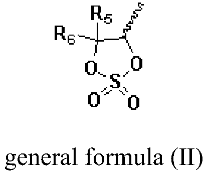
wherein R¹, R², R³ and R⁴ are independently selected from any one of groups having the structure shown in a general formula (II), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups;
R⁵ and R⁶ are independently selected from any one of groups having the structure shown in the general formula (II), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups;
the positive electrode plate comprises a positive electrode material layer which comprises a lithium supplement, and the lithium supplement comprises but not is limited to one or more of Li₂M¹O₂, Li₂M²O₃, Li₃M³O₄, Li₅M⁴O₄ and Li₆M⁵O₄, wherein M¹ comprises one or more of Ni, Co, Fe, Mn, Zn, Mg, Ca, and Cu; M² comprises one or more of Mn, Sn, Mo, Ru, and Ir; M³ comprises one or more of V, Nb, Cr, and Mo; M⁴ comprises one or more of Fe, Cr, V, and Mo; M⁵ comprises one or more of Co, V, Cr, and Mo; and in the Li₂M¹O₂, Li₂M²O₃, Li₃M³O₄, Li₅M⁴O₄, and Li₆M⁵O₄, the valence state of each metal element except Li is lower than the highest oxidation valence state of the metal element.

2. The secondary battery according to claim 1, wherein in the additive, R¹, R², R³ and R⁴ are independently selected from any one of groups having the structure shown in the general formula (II), hydrogen atoms, halogen atoms, C1-C3 alkyl groups, C1-C3 haloalkyl groups, C1-C3 alkoxy groups, C1-C3 haloalkoxy groups, C2-C3 alkene groups, C2-C3 ester groups, cyano groups, and sulfonic acid groups;
R⁵ and R⁶ are independently selected from any one of hydrogen atoms, halogen atoms, C1-C3 alkyl groups, C1-C3 haloalkyl groups, C1-C3 alkoxy groups, C1-C3 haloalkoxy groups, C2-C3 alkene groups, C2-C3 ester groups, cyano groups, and sulfonic acid groups;
optionally, R¹, R², R³ and R⁴ are independently selected from any one of groups having the structure shown in the general formula (II), hydrogen atoms, halogen atoms, C1-C3 alkyl groups and cyano groups;
optionally, R⁵ and R⁶ are independently selected from any one of hydrogen atoms and C1-C3 alkyl groups;
optionally, R¹, R², R³ and R⁴ are independently selected from any one of groups having the structure shown in the general formula (II), hydrogen atoms, F atoms, Cl atoms, Br atoms, methyl groups, ethyl groups, propyl groups, isopropyl groups and cyano groups;
optionally, R⁵ and R⁶ are independently selected from any one of hydrogen atoms, methyl groups, ethyl groups, propyl groups and isopropyl groups;
optionally, the groups having the structure shown in the general formula (II) are selected from any one of the following groups: 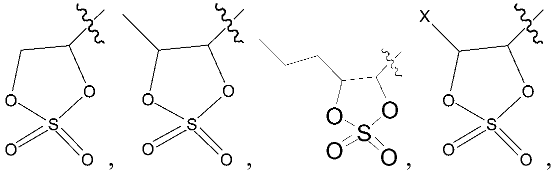 wherein X refers to F atoms, Cl atoms or Br atoms;
optionally, the groups having the structure shown in the general formula (II) are selected from any one of the following groups:

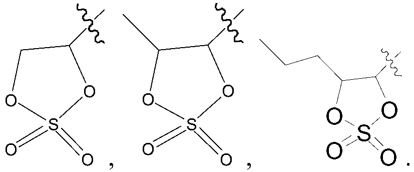

3. The secondary battery according to claim 1 or 2, wherein in the additive, the cyclic sulfate compound is selected from any one or more of the following compounds:

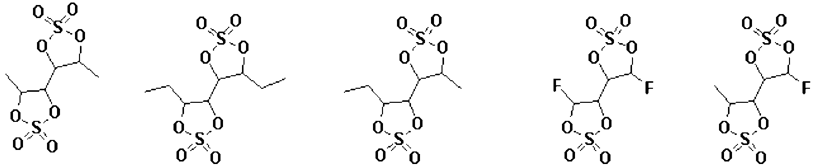

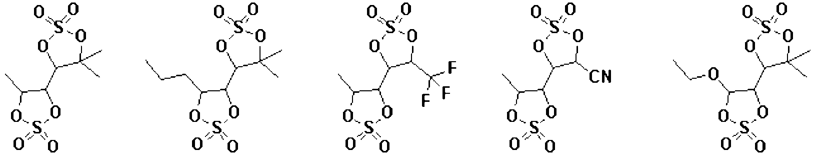

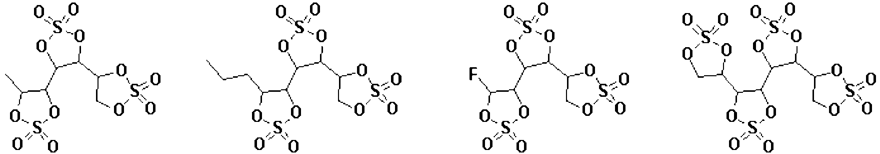

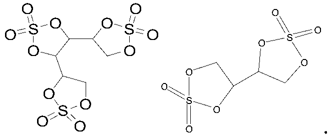

4. The secondary battery according to any one of claims 1 to 3, wherein the mass content of the cyclic sulfate compound in the non-aqueous electrolyte solution is W1, in which, 0.005%≤W1≤10%, optionally, 0.05%≤W1≤5%.

5. The secondary battery according to any one of claims 1 to 4, wherein the lithium supplement comprises but is not limited to one or more of Li₂M¹O₂, Li₅M⁴O₄, and Li₆M⁵O₄, in which, M¹ comprises one or more of Ni, and Cu; M⁴ comprises one or more of Fe, Cr, V, and Mo; and M⁵ comprises one or more of Co, V, Cr, and Mo;
optionally, Li₂M¹O₂ is Li₂CuₓNi_{y}O₂, wherein x+y=1; and
optionally, the lithium supplement comprises but is not limited to one or more of Li₂Cu_{0.6}Ni_{0.4}O₂, Li₂CuO₂, Li₂NiO₂, Li₅FeO₄, and Li₆CoO₄.

6. The secondary battery according to any one of claims 1 to 5, wherein the mass ratio of the lithium supplement in the positive electrode material layer is W₂, in which, 0.1%≤W₂≤10%; optionally, 1%≤W₂≤8%, and optionally, 1%≤W₂≤5%.

7. The secondary battery according to any one of claims 1 to 6, further comprising a negative electrode plate which comprises a negative electrode material layer, wherein the negative electrode material layer comprises a negative electrode active material; the average particle size Dv50 of the negative electrode active material is 3-25 µm; optionally, 5µm≤Dv50≤20µm, and optionally, 7µm≤Dv50≤15µm.

8. The secondary battery according to any one of claims 1 to 7, wherein the active specific surface area of the positive electrode plate is B, in which, 0<B≤20 m²/g, and optionally, 2 m²/g≤B ≤10 m²/g.

9. An electrical apparatus, comprising a secondary battery, wherein the secondary battery comprises the secondary battery according to any one of claims 1 to 8.
